# EUROPEAN PATENT APPLICATION

(11) **EP 1 956 547 A1**
(43) Date of publication of application: **13.08.2008**
(21) Application number: 08151110.7
(22) Date of filing: 06.02.2008
(51) Int. Cl.: G06Q 30/00

(54) **System, method and computer program for inputting information relating to a service or a product selected online by a user into a portable, short-range wireless communication capable device**

(30) Priority: 09.02.2007 HU 0700145
(71) Applicant: E-Group Services Kft., Hauszman Alojos u. 3/A H-1117 Budapest (HU)
(72) Inventor: Nagy, András, H-2310, Szigetszentmiklós (HU); Garami, Gábor, H-1212, Budapest (HU); Csapodi, Márton, H-1038, Budapest (HU); Kuthy, Antal, H-1122, Budapest (HU)
(74) Representative: Harangozo, Gabor

(57) **Abstract**

The present invention relates to a system, a method and a computer program for inputting information relating to a service or a product selected online by a user into a portable, short-range wireless communication capable device.

The system comprises a first server (100) for storing a first information facilitating the user to select a product or a service, said first server being adapted for generating a second information relating to the product or the service selected by the user; a second server (105) for generating a third information from the second information and for embedding said third information in a short-range wireless communication data unit, said third information relating to the selected product or service; a client device (110) for providing access to the first server (100) for the user; a communications network (115) for interconnecting the first server (100) and the client device (110); a portable, short-range wireless communication capable device (120) adapted for receiving the short-range wireless communication data unit; and a communications system (130) for forwarding the short-range wireless communication data unit from the first server (100) to the portable, short-range wireless communication capable device (120).

The method is used to operate the system according to the invention and the computer program product is used to carry out the method according to the invention.

## Description

The present invention relates to a system, a method and a computer program for inputting information relating to a service or a product selected online by a user into a portable short-range wireless communication capable device.

In the recent years, a rapid development has been experienced in the filed of devices and applications using short-range wireless communication technologies, in particular RFID, Proximity Card, NFC (Near Field Communication) and Bluetooth. The use of such technologies, primarily in the mobile devices, for example in the mobile phones, makes it possible to develop several new, convenient and secure applications. In particular, applications using the NFC technology are regarded by many people as one of the most dynamically advancing industries of the near future.

The short-range wireless communication technologies are particularly suitable for establishing device-independent communication between mobile devices and consumer electronic devices, as well as for providing secure electronic payment and secure data storing functions. Short-range wireless communication capable devices, like mobile phones, computers, etc. equipped with such an interface, are all capable of reading data stored in other short-range wireless communication capable devices, or serving as data sources for other short-range wireless communication capable devices. The short-range wireless communication capable devices may transmit both public and secret data with arbitrary content to each other, wherein such data may include, for example, data associated with an electronic payment transaction, data associated with the use of public-service vehicles, data permitting the download of a digital content or permitting access for a computer application, etc.

Document US 2006/018404 discloses a system wherein in response to downloading a digital content originating from an internet service provider into a mobile phone adapted to short-range wireless communication, the mobile phone appropriately modifies a pre-stored value in a separate portable device which is also adapted to short-range wireless communication. Should the value (balance) stored in said device decreases below a predetermined value, the balance may be augmented by an authorised service provider by a value corresponding to a prepaid amount. The system's flexibility is due to the feature that one balance handling device is capable of managing a plurality of users at the same time, and additionally, the balance of a user may be transferred to any other short-range wireless communication capable device adapted for balance-handling. Neither this document, nor other document mentions that a user could obtain short-range wireless communication data of an arbitrary application.

It is therefore an object of the present invention to provide an improved system and method in which the user may select any product or service in online manner, for example through the internet, and the product or service may be obtained by means of a short-range wireless communication data unit down-loaded into a portable, short-range wireless communication capable device of the user. A reader unit accommodated in the place of delivering the service or the product is used to read out, in a conventional manner, the corresponding data unit previously inputted into and stored in the user's portable, short-range wireless communication capable device, and in case of proper information content, the user becomes entitled to receive the product or service.

Another object of the present invention is to provide a system in which the short-range wireless communication data unit requested by a users is forwarded in a reliable and secure way to the user, or to be more precisely, to the user's portable, short-range wireless communication capable device.

The above objects are achieved by providing a system for inputting information relating to a service or product selected online by a user into a portable, short-range wireless communication capable device. The system comprises a first server for storing a first information facilitating the user to select a product or a service, said first server being adapted for generating a second information relating to the product or the service selected by the user; a second server for generating a third information from the second information and for embedding said third information in a short-range wireless communication data unit, said third information relating to the selected product or service; a client device for providing access to the first server for the user; a communications network for interconnecting the first server and the client device; a portable, short-range wireless communication capable device adapted for receiving the short-range wireless communication data unit; and a communications system for forwarding the short-range wireless communication data unit from the first server to the portable, short-range wireless communication capable device.

The above objects are further achieved by providing a method of inputting information relating to a product or a service selected online by a user into a portable, short-range wireless communication capable device. The method comprises the steps of pre-storing a first information in a first server, said first information facilitating the user to select a product and/or a service; forwarding the first information to a client device for presentation; in the first server, receiving data suitable for identifying the product or the service selected by the user on the basis of the first information; in the first server, generating a second information relating to the selected product or service; forwarding said second information to a second server; generating a third information from said second information and embedding said third information in a short-range wireless communication data unit, said third information relating to the selected product or service; forwarding said short-range wireless communication data unit to the first server; and forwarding the short-range wireless communication data unit from the first server to the portable, short-range wireless communication capable device.

Finally, the above objects are also achieved by providing a computer program product which is stored on a computer readable data storage medium, said computer program product comprising instructions that, when executed on one or more computer constituting the system according to the invention, carry out the method according to the invention.

The invention will now be described in more detail by referring to the accompanying drawing, in which:
- Figure 1 is a schematic block diagram of the system according to the invention;
- Figure 2 is the block diagram of an embodiment of the system according to the invention;
- Figure 3 is the block diagram of another embodiment of the system according to the invention; and
- Figure 4 is a flow diagram depicting the primary steps of the method according to the invention.

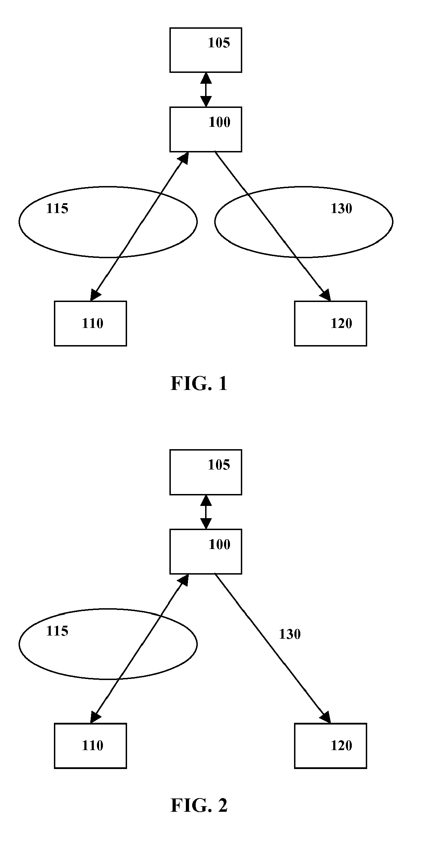

In Figure 1, a block diagram of the system according to the invention is schematically illustrated. The system comprises an arbitrary number of first server 100, an arbitrary number of second server 105 for generating short-range wireless communication data units, one or more client device 110, a communications network 115 for establishing interconnection between the first servers 100 and the client devices 110, one or more portable, short-range wireless communication capable device 120 and a communications system 130 for forwarding the short-range wireless communication data units from the first servers 120 to the portable, short-range wireless communication capable devices 120. Although for the sake of simplicity, only one first server, one second server, one client device and one portable, short-range wireless communication capable device are shown in Figure 1, it should be understood that the system according to the invention may comprise several ones for each of said devices.

One of the basic functions of the first server 100 is to store information associated with the various products and services (first information) and to provide access to such information for the users. Another basic function of the first server 100 is to intermediate between the users and the second server 105 which is used to generate the short-range wireless communication data units. This function involves the generation of data relating to the products and the services selected by the users (second information) and the transmission of such data to the second server 105, on the one hand, and the reception of the short-range wireless communication data units generated and transmitted by the second servers 105 and the transmission thereof to the portable, short-range wireless communication capable devices 120 of the users, on the other hand.

The short-range wireless communication may be based on RFID, NFC or other short-range radio communication technologies (e.g. Proximity Card, MiFare (Philips), FeliCa (Sony) or Bluetooth), but in a particular case, one may consider even the use of infrared data transmission.

Throughout the description, the term "product" is used for any kind of product, like physically existing, tangible products, information stored in electronic, optical or other format and forwarded in electronic, electromagnetic, optical or other way. The information product offered to a user includes, for example, a digital content, in particular a data file containing audio, video or still image data, a computer program, a computer or video game, or any other information the is useful or valuable for the user, such as GPS data.

The first information may be manifold in respect of its content; including, for example, a material introducing a product or a service, a catalogue, a price list, an advertising or promotional material, etc. These contents are stored or forwarded to the client device 110 preferably in the form of one or more audio and/or image data file.

The second information associated with the product or service selected by the user on the basis of the first information may contain, for example, data relating to the sale of the product or the service, in particular the price and the quantity of the product or the service, the mode of payment, the place of sale of the product or the place of servicing. In case of digital contents, computer applications, computer games, etc., the second information may contain an identifier of the product, directions for use, etc. Should the first information relate to obtaining information that is useful or valuable for the user, the second information may contain, for example, the type, the features or any identifier of the information requested by the user.

When the selection of a product and/or a service is allowed online via the internet, the first server 100 is preferably implemented as a web server that provides the information associated with the selectable products or services on a web page presented by the client device 110.

The client device 110 is used to provide access to the first information stored in the first server 100 for the users. For example, when the products or services can be selected online by the users via the internet, the client device 110 is typically implemented in the form of a computer running a web client application (e.g. browser), wherein said computer may be either a desktop computer or a portable computer (e.g. laptop, notebook, PDA, etc.). However, the client device 110 may be even a mobile phone with WAP function.

Based on the second information generated by the first server 100, the second server 105 generates a specific third information relating to the selected product or service, said third information carrying meaningful information for a short-range wireless communication capable reader unit operating in the place of use of the third information, i.e. the place where the product or the service is delivered. If necessary, the portable, short-range wireless communication capable device of the user may also be provided with a function of presenting the entire third information or a part thereof for the user.

The second server 105 is used to embed the third information in a data unit corresponding to the applied short-range wireless communication technology, wherein said data unit is typically one or more data frame that in addition to the effective information, may also contain further data, like a header, a check sum, a digital signature, etc., required mainly for the reliable and secure communication. The format and the structure of the short-range wireless communication data unit are defined by the specification or the standard of the particular technology.

Although from functional point of view, the first server 100 and the second server 105 are different entities, those can be implemented in the same computer in practice, provided that the organisation operating the first server 100 has the capability and the authority to generate short-range wireless communication data units. However, the first server 100 and the second server 105 may be separated both in physical and geographical terms, which is a typical situation in a system in which generation of the short-range wireless communication data units is allowed only for a few special authorised organisations, whereas substantially more online (internet-based) service providers, merchants, web stores, brokers, etc. may provide the possibility of selection among products or services.

The communication between the first server 100 and the client device 110 is established through the communications network 115. In case of online commerce via the internet, the communications network 115 is obviously the Internet itself. It should be understood, however, that the communications network 115 may be any other kind of communications network, such as a non-public computer network (e.g. private network, intranet) or a wireless communications network (e.g. GSM network, satellite data transmission system). The first server 100 and the client device 110 both comprise a communication interface corresponding to the communications network 115. Data communication between the first server 100 and the client device 110 is essentially bidirectional since information associated with the products and/or services are forwarded from the first server 100 to the respective application of the client device 110, whereas in the opposite direction, corresponding instructions of the operations performed by the user in the client application (for example display paging, selection, order, confirmation, payment, etc.), as well as identification data of the selected product or service are forwarded.

It is preferred that in addition to receiving the short-range wireless communication data unit containing the third information, the portable, short-range wireless communication capable device 120 is also suitable for storing said data unit. Thus the short-range wireless communication data unit stored in the short-range wireless communication capable device 120 can be used later on. As the way of reading out and processing the short-range wireless communication data unit stored in the portable, short-range wireless communication capable device 120 is well known for one skilled in the art, its detailed description is omitted.

In a preferred embodiment of the system according to the invention, the portable, short-range wireless communication capable device 120 is in the form of a mobile phone comprising a short-range wireless communication interface, for example an NFC interface.

The short-range wireless communication data unit is forwarded by the first server 100 to the portable, short-range wireless communication capable device 120 through a communications system 130. In an alternative embodiment of the system according to the invention shown in Figure 2, the portable, short-range wireless communication capable device 120 is a mobile phone, and consequently, the communications system 130 is formed by a mobile telecommunications network (e.g. GSM network).

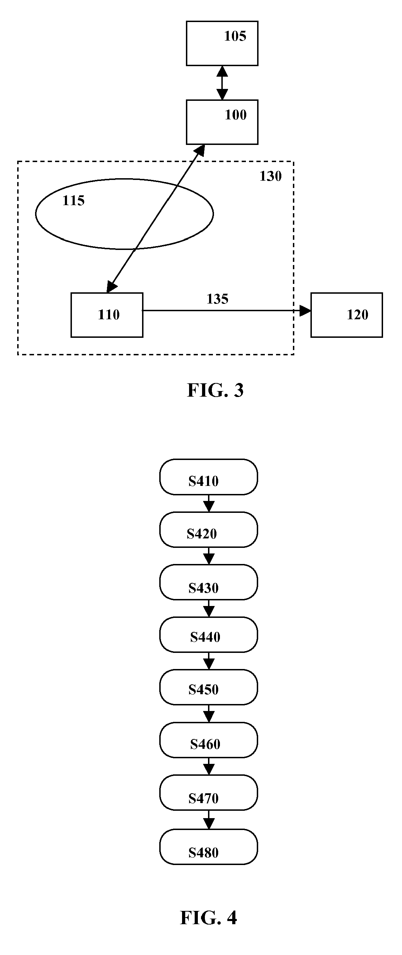

In another alternative embodiment of the system according to the invention shown in Figure 3, the short-range wireless communication data unit is forwarded from the first server 100 to the portable, short-range wireless communication capable device 120 through the client device 110. Consequently, in this embodiment, the communications system 130 is formed of the first server 100, the communications network 115 and the interconnection 135 between the client device 110 and the portable, short-range wireless communication capable device 120. Should the client device 110 comprise a short-range wireless communication interface as well, a short-range wireless communication data unit - as embedded in a second short-range wireless communication data unit - may be forwarded from the client device 110 to the portable, short-range wireless communication capable device 120 through a short-range wireless communication interconnection 135 (e.g. Bluetooth or NFC).

Now the basic steps of the method of operating the system according to the invention will be described with reference to the flow diagram depicted in Figure 4.

In the first step S410 of the method, a first information associated with products and/or services is pre-stored in the first server 100, such as a web server, said first information being used to facilitate the selection of a product or a service.

In step S420, subsequent to the initiation of the user, the first information is forwarded to the user's client device for displaying. The client device is preferably a computer running a web client application (e.g. browser), but other device capable of establishing communication with the first server, e.g. a mobile phone with WAP function, may also be used.

Subsequently to the selection of one (or more) product or service by the user on the basis of the first information presented by the client device, identification data of the selected product or service are received in the first server in step S430, and according to said data, a second information associated with the selected product or service is generated for the second server in step S440. The second information typically contains commercial data relating to the selected product or service or other data required for the access to the product or the service.

In step S450, the second information is forwarded from the first server through an appropriate communication channel to the second server. In step S460, a specific third information associated with the selected product or service is generated from the second information, and subsequently, said third information is embedded in a short-range wireless communication data unit, for example in one or more NFC data frame. Confidentiality, integrity and authenticity of the third information can be protected by proper encoding methods.

In step S470, the communication data unit containing the third information is returned to the first server on the above mentioned communication channel, and then, in step S480, it is forwarded to the user's portable, short-range wireless communication capable device through a communications system. If necessary, the communication data unit may be stored in the user's portable, short-range wireless communication capable device for later use.

As mentioned above, both of the first server and the second server may be implemented in a single computer, in which case the communication channel between the two servers is formed by the programming interface between the two server applications.

In order to ensure secure storage of the communication data unit, the user's portable, short-range wireless communication capable device may request the user to input an identification code, typically a PIN code, before storing the data unit. This identification code is also stored in the portable, short-range wireless communication capable device with assigning it to the respective short-range wireless communication data unit. In this embodiment, when the short-range wireless communication data unit is to be used, the data unit can be read out from the portable, short-range wireless communication capable device only after the corresponding identification code has been entered.

As mentioned above, it is preferred to use a mobile phone as a portable, short-range wireless communication capable device, although other portable devices, like a laptop, a notebook, a PDA, a contact free card, an RFID tag, etc., comprising a short-range wireless communication interface may also be used for this purpose. When a mobile phone is used as a portable, short-range wireless communication capable device in an alternative embodiment of the method according to the invention, the short-range wireless communication data unit is forwarded from the first server to such a mobile phone through a mobile telecommunications network.

When a short-range wireless communication capable computer is used as a client device, it is possible to forward the short-range wireless communication data unit containing the third information from the first server to the short-range wireless communication capable device through the client device itself. In this case, the communications system used to forward the short-range wireless communication data unit is formed of the communications network interconnecting the first server and the client device, the client device itself, and the communication interconnection between the client device and the portable, short-range wireless communication device.

In a particularly preferred embodiment of the method according to the invention, wherein the online selection of products and services is allowed via the internet, the server may be a web server, and the client device may be a computer running a web client application. In this case, the internet is used to forward the short-range wireless communication data unit from the first server to the client device, while any kind of available interconnection, for example Bluetooth or NFC, may be used to forward said data unit from the client device to the user's portable, short-range wireless communication capable device.

Finally, the present invention relates to a computer program product which is stored on a computer readable data storage medium, said computer program product comprising instructions that, when executed on one or more above mentioned computer (e.g. server, client device or portable, short-range wireless communication capable device) constituting the system according to the invention, carry out the method according to the invention.

The embodiments of the system and the method according to the invention disclosed in the foregoing description, the appended claims and the accompanying drawings have been presented only for purposes of illustration, and they are not intended to limit the invention to the specific embodiments. Many modifications of the system and the method according to the invention may be considered within the scope of the invention defined by the appended claims.

## Claims

1. A system for inputting information relating to a service or product selected online by a user into a portable, short-range wireless communication capable device (120), **characterized in that** the system comprises:
- a first server (100) for storing a first information facilitating the user to select a product or a service, said first server being adapted for generating a second information relating to the product or the service selected by the user;
- a second server (105) for generating a third information from the second information and for embedding said third information in a short-range wireless communication data unit, said third information relating to the selected product or service;
- a client device (110) for providing access to the first server (100) for the user;
- a communications network (115) for interconnecting the first server (100) and the client device (110);
- a portable, short-range wireless communication capable device (120) adapted for receiving the short-range wireless communication data unit; and
- a communications system (130) for forwarding the short-range wireless communication data unit from the first server (100) to the portable, short-range wireless communication capable device (120).

2. The system of claim 1, wherein the short-range wireless communication is based on a technology selected from the group of: RFID, Proximity card, NFC, Bluetooth and infrared data transmission.

3. The system of claim 1 or 2, wherein the first information relates to a product type selected from the group of: tangible product; digital content, in particular data file containing audio, video or still image data; computer program; computer game or video game; other information that is useful or valuable for the user.

4. The system of claim 3, wherein the information that is useful or valuable for the user includes GPS data.

5. The system of any one of claims 1 to 4, wherein the first information contains one or more image and/or audio data file selected from the group of: material introducing a product or a service; catalogue; price list; advertising or promotion material.

6. The system of any one of claims 1 to 5, wherein the second information relating to the product or service selected by the user contains at least one kind of data selected from the group of: data relating to selling the product or the service, in particular the price and the quantity of the product or the service, the mode of payment, the place of sale of the product or the place of servicing; an identifier and directions for use of a digital content; the type or an identifier of any information that is useful or valuable for the user.

7. The system of any one of claims 1 to 6, wherein the third information generated by the second server (105) contains data selected from the group of: selling code of the product or the service; permission code for downloading a digital content; an access code for computer programs, computer games or video games, in particular a licence number, a secret password; and other data suitable for generating information useful or valuable for the user.

8. The system of claim 7, wherein the data suitable for generating information that is useful or valuable for the user contain encoded GPS coordinates.

9. The system of any one of claims 1 to 8, wherein the portable, short-range wireless communication capable device (120) is a mobile phone.

10. The system of claim 9, wherein the communications system (130) interconnecting the first server (100) and the portable, short-range wireless communication capable device (120) is a mobile telecommunications network.

11. The system of any one of claims 1 to 8, wherein
- the client device (110) is a computer adapted to short-range wireless communication, and
- the communications system (130) is formed of the communications network (115) interconnecting the first server (100) and the client device (110), the client device (110) itself, and the communication interconnection (135) between the client device (110) and the portable, short-range wireless communication device (120).

12. The system of any one of claims 1 to 11, wherein
- the first server (100) is a web server,
- the client device (110) is a computer operating as a web client, and
- the communications network (115) is the internet.

13. A method of inputting information relating to a product or a service selected online by a user into a portable, short-range wireless communication capable device, **characterized in that** the method comprises the steps of:
- pre-storing a first information in a first server, said first information facilitating the user to select a product and/or a service (S41 0);
- forwarding the first information to a client device for presentation (S420);
- in the first server, receiving data suitable for identifying the product or the service selected by the user on the basis of the first information (S430);
- in the first server, generating a second information relating to the selected product or service (S440);
- forwarding said second information to a second server (S450);
- generating a third information from said second information and embedding said third information in a short-range wireless communication data unit, said third information relating to the selected product or service (S460);
- forwarding said short-range wireless communication data unit to the first server (S470); and
- forwarding the short-range wireless communication data unit from the first server to the portable, short-range wireless communication capable device (S480).

14. The method of claim 13, wherein the portable, short-range wireless communication capable device is adapted to use a technology selected from the group of: RFID, Proximity card, NFC, Bluetooth and infrared data transmission.

15. The method of claim 13 or 14, wherein the first information includes information relating to a product type selected from the group of: tangible product; digital content, in particular a data file containing audio, video or still image data; computer program; computer game or video game; and other information that is useful or valuable for the user.

16. The method of any one of claims 13 to 15, wherein the first information contains one or more image and/or audio data file selected from the group of: material introducing a product or a service; catalogue; price list; advertising or promotion material.

17. The method of any one of claims 13 to 16, wherein the second information relating to the product or service selected by the user contains at least one kind of data selected from the group of: data relating to the sale of the product or the service, in particular the price and the quantity of the product or service, the mode of payment, the place of sale of the product or the place of servicing; an identifier and directions for use of a digital content; and the type or an identifier of any information that is useful or valuable for the user.

18. The method of any one of claims 13 to 17, wherein the third information contains data selected from the group of: sale code of the product or the service; permission code for downloading digital content; access code for computer programs, computer games or video games, in particular a licence number, a secret password; and other data suitable for generating information that is useful or valuable for the user.

19. The method of any one of claims 13 to 18, wherein a mobile phone is used as a portable, short-range wireless communication capable device.

20. The method of claim 19, wherein the short-range wireless communication data unit containing the third information is forwarded from the first server to the short-range wireless communication capable device through a mobile telecommunications network.

21. The method of any one of claims 13 to 18, wherein
- the client device a computer adapted to short-range wireless communication, and
- the short-range wireless communication data unit containing the third information is forwarded from the first server through the client device by using the communications network interconnecting the first server and the client device, and the communication interconnection between the client device and the portable, short-range wireless communication device.

22. The method of any one of claims 13 to 21, wherein
- the first server is a web server,
- the client device is a computer operating as a web client, and
- the first information is forwarded from the first server to the client device through the internet, and the data suitable for identifying the product or the service selected by the user is received in the first server through the internet.

23. A computer program product which is stored on a computer readable data storage medium, **characterized in that** the computer program product comprises instructions that, when executed on one or more computers constituting the system according to any one of claims 1 to 12, carry out the method according to any one of claims 13 to 22.
